# EUROPEAN PATENT APPLICATION

(11) **EP 1 949 975 A1**
(43) Date of publication of application: **30.07.2008**
(21) Application number: 06823318.8
(22) Date of filing: 10.11.2006
(51) Int. Cl.: B05C 5/00, B05D 1/26, B41J 2/01, G02B 5/20

(54) **INK JETTING DEVICE AND INK JETTING METHOD**

(30) Priority: 17.11.2005 JP 2005333148
(71) Applicant: Sharp Kabushiki Kaisha, Osaka-shi, Osaka 545-8522 (JP)
(72) Inventor: YOSHIOKA, Chiyoshi, Nara 631-0806 (JP)
(74) Representative: Brown, Kenneth Richard
(86) International application number: PCT/JP2006/322496
(87) International publication number: WO 2007/058131

(57) **Abstract**

The present invention provides an ink discharging apparatus which can reduce processing time required for discharging ink onto all ink discharge targets. The ink discharging apparatus of the present invention has an ink discharging section (4) which is arranged to be able to move relative to a CF panel (2b) in order to discharge ink onto plural defective pixels scattered on the CF panel (2b). The ink discharging section (4) discharges ink onto neighboring defective pixels (3R, 3G, and 3B) among plural defective pixels, by performing a single scanning movement with respect to the neighboring defective pixels (3R, 3G, and 3B).

## Description

### TECHNICAL FIELD

The present invention relates to an ink discharging apparatus and an ink discharging method, which make it possible to quickly and precisely discharge ink onto an ink discharge target such as a defective pixel.

### BACKGROUND ART

Ink discharging technologies have recently been not only used for consumer-use printers but also widely used for apparatuses for manufacturing color filter panels (hereinafter, CF panels) of liquid crystal displays and for other manufacturing apparatuses. As such, the use of the technologies has been diversified.

An example of the above is an ink jet patterning technology by which a pattern is formed on a substrate by utilizing the ink discharging technologies. The ink jet patterning technology is a technology to directly print a miniature pattern on a substrate by discharging a small amount of liquid (ink) by an ink discharging apparatus. This ink jet patterning technology has drawn attention as a technology usable in process without vacuum, in place of a conventional pattern formation which utilizes photolithography and involves vacuum process.

Considerable efforts have been made to develop an apparatus for forming a CF panel by the ink jet patterning technology. Such an apparatus forms a CF panel in such a way that pixels are filled by allowing red (R), green (G), and blue (G) inks to land on respective RGB pixel areas formed on a glass substrate. Such an apparatus has particularly been used for manufacturing CF panels of liquid crystal displays which are increasingly upsized these days. The apparatus is, as a manufacturing apparatus, rigorously controlled in terms of processing time, and hence the apparatus is required to unfailingly complete the process within a certain period of short time.

The ink jet patterning technology has been not only used as a full-screen pixel printing technology but also widely used as a technology to repair a defect in a pixel due to contamination or adhesion of a foreign substance or due to color mixture. The repair of a defective pixel by the ink jet patterning technology is carried out in such a way that, in a case of a defection of a pixel due to leakage or the like of ink between adjacent pixels, the ink layer of the defective pixel in which mixture of inks has occurred is removed by a laser apparatus such as a YAG laser, and ink with a specified R, G, or B color is discharged again by the ink jet patterning technology onto the part after the removal.

Patent Document 1 teaches a method of repairing a pixel. According to the method repair is carried out as follows: In an apparatus for repairing a CF pixel by the ink jet patterning technology, plural defective pixels due to ink mixture or the like are photographed in order, by a defect position recognizing section including a camera and the like, so that the positions and shapes of the respective defective pixels are recognized. After removing an unnecessary CF film of each defective pixel by a defective pixel removing section adopting a laser processing apparatus or the like, an ink discharger is moved to the position above the defective pixel from which the unnecessary CF film has been removed by the laser processing apparatus, and the pixel is repaired by discharging ink from the discharger and coloring the pixel.

Japanese Unexamined Patent Publication No. 7-318724 (published on December 8, 1995)

### DISCLOSURE OF INVENTION

Due to the recent upsizing of substrates of CF panels used in liquid crystal displays, many defective pixels which need repair are scattered across a substrate, as the size of the substrate has been increased. Furthermore, those defective pixels are categorized into various types such as those widely scattered across a large substrate and those locally concentrate.

Because the takt time of such a defective pixel repairing apparatus repairing the aforesaid defective pixels is strictly controlled, the reduction in the processing time is an unavoidable task. It is therefore necessary to minimize the time required for the movement of an ink discharging section of a defective pixel repairing apparatus to each defective pixel. For this reason, to allow the ink discharging section moving above the defective pixels to repair a lot of defective pixels in a short period of time, it is necessary to shorten the traveling distance, reduce the number of times the ink discharge section moves, and allow the ink discharge section to simultaneously repair a larger number of defects.

In the apparatus disclosed by Patent Document 1, however, since a defective section from which a defective pixel has been independently removed by a laser processing apparatus or the like is repaired by exclusively discharging ink onto that section, the laser processing must be performed n times for n defective pixels and the head must be moved n times, to repair all defective sections. While in many cases defective pixels due to ink mixture are adjacent to one another, the aforesaid scheme repairs each defective pixel independently. That is to say, the operation to repair each defective pixel is repeated. As a result, the repair operation must be repeated many times when there are a lot of defective sections, and hence the time required for discharging ink onto all of the ink discharge targets is very long.

The present invention was done to solve the problem above, and the objective of the present invention is to provide an ink discharging apparatus and an ink discharging method, which can reduce time to discharge ink onto all ink discharge targets.

To achieve the objective above, an ink discharging apparatus of the present invention is characterized by including ink discharge means which is arranged to be movable relative to a medium in order to discharge ink onto plural ink discharge targets dispersed on the medium, onto neighboring ink discharge targets among said plural ink discharge targets, the ink discharge means discharging the ink by a single scanning movement with respect to said neighboring ink discharge targets.

Because of this characteristics, ink is discharged onto the neighboring ink discharge targets by a single scanning movement of the ink discharge means. This makes it possible to reduce the number of times the ink discharge means moves to the ink discharge targets, as compared to the conventional arrangement in which ink is individually discharged to each ink discharge target. As a result it is possible to shorten processing time to discharge ink onto all ink discharge targets.

To achieve the objective above, an ink discharging method of the present invention is characterized by using ink discharge means which is arranged to be movable relative to a medium in order to discharge ink onto plural ink discharge targets dispersed on the medium, onto neighboring ink discharge targets among said plural ink discharge targets, the ink being discharged by a single scanning movement of the ink discharge means with respect to said neighboring ink discharge targets.

Because of this characteristics, ink is discharged onto the neighboring ink discharge targets by a single scanning movement of the ink discharge means. This makes it possible to reduce the number of times the ink discharge means moves to the ink discharge targets, as compared to the conventional arrangement in which ink is individually discharged to each ink discharge target. As a result it is possible to shorten processing time to discharge ink onto all ink discharge targets.

As discussed above, the ink discharging apparatus of the present invention is arranged so that the ink discharge means discharges ink onto neighboring ink discharge targets among plural ink discharge targets, by a single scanning movement with respect to the neighboring ink discharge targets. This makes it possible to reduce the number of times the ink discharge means moves to the ink discharge targets, as compared to the conventional arrangement in which ink is individually discharged to each ink discharge target. As a result it is possible to shorten processing time to discharge ink onto all ink discharge targets.

As discussed above, the ink discharging method of the present invention is arranged so that ink is discharged onto neighboring ink discharge targets among plural ink discharge targets, by a single scanning movement of the ink discharge means with respect to the neighboring ink discharge targets. This makes it possible to reduce the number of times the ink discharge means moves to the ink discharge targets, as compared to the conventional arrangement in which ink is individually discharged to each ink discharge target. As a result it is possible to shorten processing time to discharge ink onto all ink discharge targets.

### BRIEF DESCRIPTION OF DRAWINGS

Fig. 1 relates to an embodiment of the present invention and illustrates a substantial part of an ink discharging apparatus.
Fig. 2 is a schematic of a CF panel formed on a substrate which is a target of ink discharge from the ink discharging apparatus.
Fig. 3 shows defective pixels in the CF panel.
Fig. 4 shows defective pixel groups in each of which the defective pixels are grouped.
Fig. 5 is used for describing an ink discharging section of an ink discharging apparatus, which discharges ink onto three defective pixels adjacent to one another.
Fig. 6(a) is used for describing an ink discharging section which discharges ink onto two defective pixels adjacent to one another.
Fig. 6(b) is used for describing an ink discharging section which discharges ink onto four defective pixels adjacent to one another.
Fig. 7 is a graph showing the relationship between a discharge frequency and a discharge volume of the ink discharging section.
Fig. 8 is used for describing an ink discharging section which discharges ink onto other three defective pixels adjacent to one another.
Fig. 9 is a flowchart of the operation of the ink discharging section of the present embodiment.
Fig. 10 is used for describing an ink discharging section of an ink discharging apparatus, which discharges ink onto two defective pixels which are close to one another.
Fig. 11 is used for describing an ink discharging section of an ink discharging apparatus, which discharges ink onto other two defective pixels which are close to one another.

### REFERENCE NUMERALS

- 1: INK DISCHARGING APPARATUS

- 2a, 2b, 2c: CF PANELS (MEDIUMS)

- 3R, 3G, 3B: DEFECTIVE PIXELS

- 4: INK DISCHARGING SECTION
- 5: DEFECTIVE PIXEL INFORMATION STORAGE SECTION
- 6: DEFECTIVE PIXEL GROUPING SECTION
- 7: NOZZLE ALLOCATION
- 8: DISCHARGE PATTERN GENERATION SECTION

- 9a, 9b, 9c, 9d, 9e, 9f: DEFECTIVE PIXEL GROUPS

- 9g, 9h, 9i, 9j: DEFECTIVE PIXEL GROUPS
- 10R, 10G, 10B: HEADS
- 11R, 11G, 11B: SELECTABLE NOZZLES (NOZZLES)

### BEST MODE FOR CARRYING OUT THE INVENTION

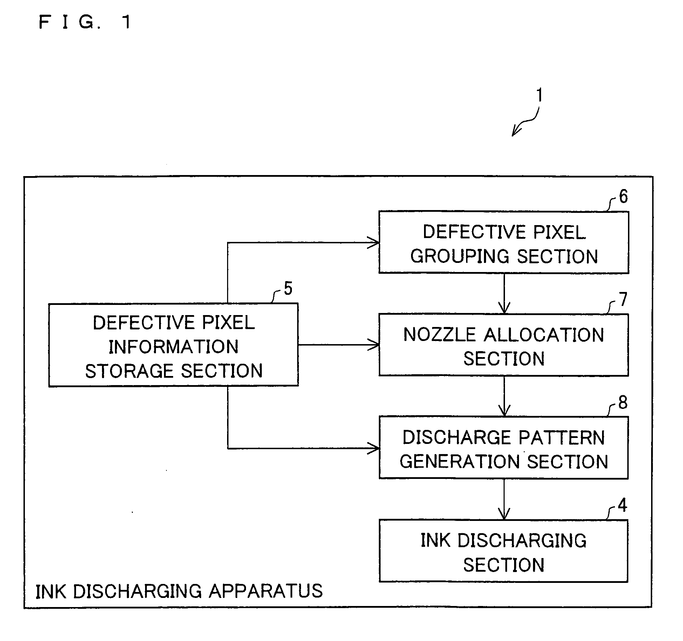

The following will describe an embodiment of the present invention with reference to Figs. 1 through 11. The present embodiment presupposes a repair of CF pixels, which is carried out in such a way that defective pixels scattered over a CF panel formed on a substrate which is a medium are filled by discharge by means of inkjet.

Fig. 1 relates to the embodiment of the present invention and is a block diagram showing a substantial part of an ink discharging apparatus 1. The ink discharging apparatus 1 includes a defective pixel information storage section 5. The defective pixel information storage section 5 stores information by which defective pixels scattered over a CF panel are specified. The ink discharging apparatus 1 also includes a defective pixel grouping section 6. The defective pixel grouping section 6 generates, based on information which is stored in the defective pixel information storage section 5 and by which defective pixels are specified, defective pixel groups in each of which plural defective pixels adjacent to one another are grouped.

The ink discharging apparatus 1 is further provided with a nozzle allocation section 7. The nozzle allocation section 7 allocates, to each defective pixel belonging to a defective pixel group, a nozzle of the ink discharging section 4. The ink discharging apparatus 1 is further provided with a discharge pattern generation section 8. The discharge pattern generation section 8 generates a discharge timing signal indicating an ink discharge pattern and supplies the discharge timing signal to the nozzle allocated by the nozzle allocation section 7. The ink discharging section 4 is arranged to move relative to the CF panel, in order to discharge ink to plural defective pixels scattered over the CF panel. Based on the discharge timing signal generated by the discharge pattern generation section 8, each nozzle of the ink discharging section 4 discharges ink onto plural defective pixels belonging to a single defective pixel group, while the ink discharging section 4 carries out a single scanning movement with respect to the plural defective pixels.

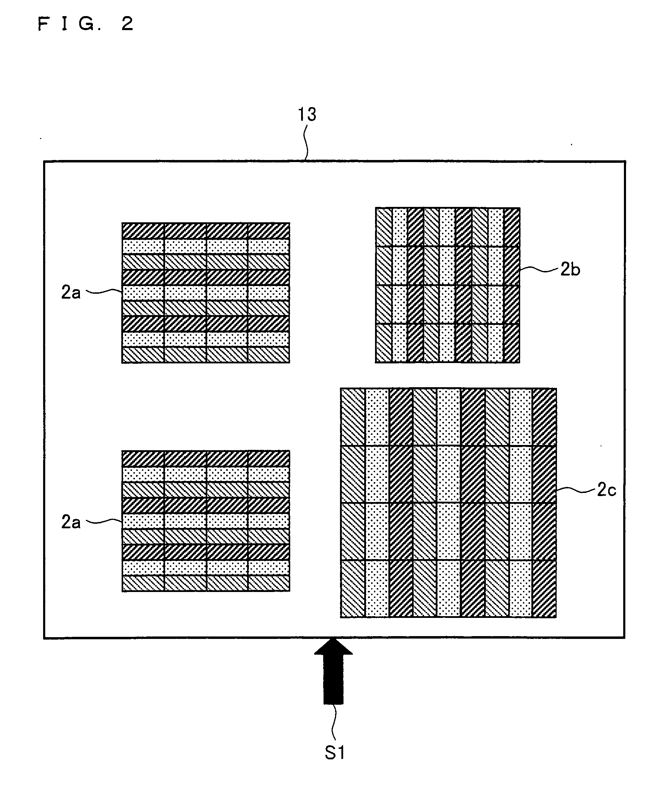

Fig. 2 is a schematic of CF panels 2a, 2b, and 2c which are formed on a substrate 13 and are the targets of ink discharge from the ink discharging apparatus 1. On the substrate 13 plural CF panels are formed, that is, two CF panels 2a, a single CF panel 2b, and a single CF panel 2c are formed. The pixels of each CF panel 2a are arranged to have horizontally-long rectangular shapes in consideration of a main scanning direction S1 in which the ink discharge section 4 mainly performs scanning on the substrate 13. The pixels of the CF panel 2b and the pixels of the CF panel 2c are arranged to have vertically-long rectangular shapes in consideration of the main scanning direction S1. As can be seen from examples of the CF panels 2a and 2b and the CF panel 2c, differently-sized CF panels are concurrently provided on a single substrate 13.

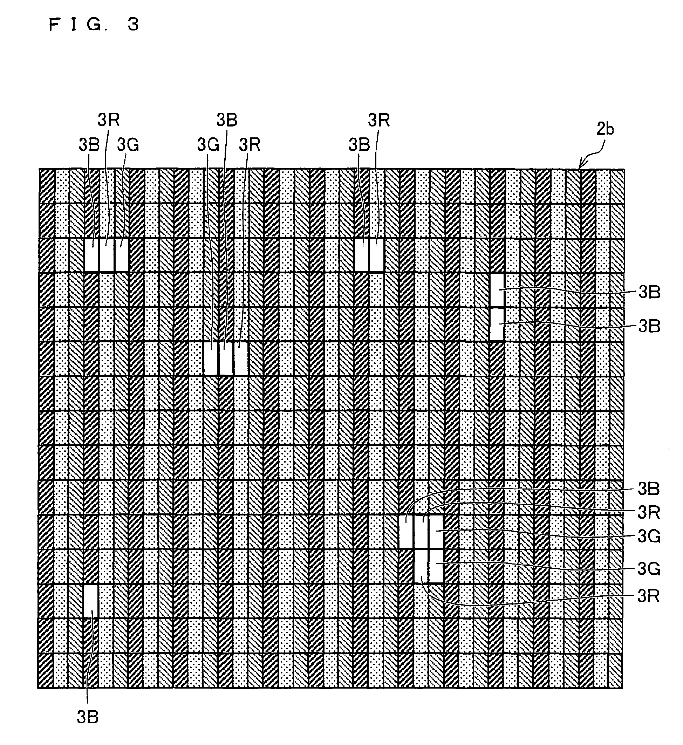

Fig. 3 shows defective pixels on the CF panel 2b. The defective pixels 3R, 3G, and 3B which are the target or repair are scattered on the CF panels 2a, 2b, and 2c which are provided to spread on the surface of the substrate 13. In the meanwhile, as shown in Fig. 3, defects often occur in clusters across about two or three adjacent pixels, on account of ink mixture caused by dust or the like adhered to the surface of the substrate 13. In Fig. 3, as an example, the defective pixel 3R indicates a pixel defect of red color, the defective pixel 3G indicates a pixel defect with green color, and the defective pixel 3B indicates a pixel defect with blue color.

The inks used here are red (R), green (G), and blue (B) inks corresponding to the respective pixel colors in the CF panels 2a, 2b, and 2c. The heads of the ink discharging section 4 are separated from one another for the sake of preventing the inks from being mixed inside, and the heads are arranged so that the discharge operations thereof are independently controllable. The pixel sections (defective pixels 3R, 3G, and 3B) to be repaired have substantially rectangular shapes as shown in Fig. 3. The inner part of the pixel, which is to be filled with ink, is arranged to be hydrophilic to facilitate the spread of ink. The periphery of the pixel is arranged to be water repellent for the purpose of preventing ink to enter an adjacent pixel, with the result that adjacent pixels are separated from one another.

The ink discharging apparatus 1 generates information for specifying defective pixels with reference to pieces of information such as the size and orientation of each defective pixel, a specified color of each defective pixel, and coordinates of the pixel on the substrate. The ink discharging apparatus 1 stores the generated information in the defective pixel information storage section 5.

In the defective pixel grouping section 6, for the purpose of simultaneously repairing plural defective pixels while the ink discharging section 4 moves in the main scanning direction S1, some of the defective pixels 3R, 3G, and 3B stored in the defective pixel information storage section 5 are grouped in consideration of the configuration of the aforesaid neighboring defective pixels caused by reasons such as ink mixture.

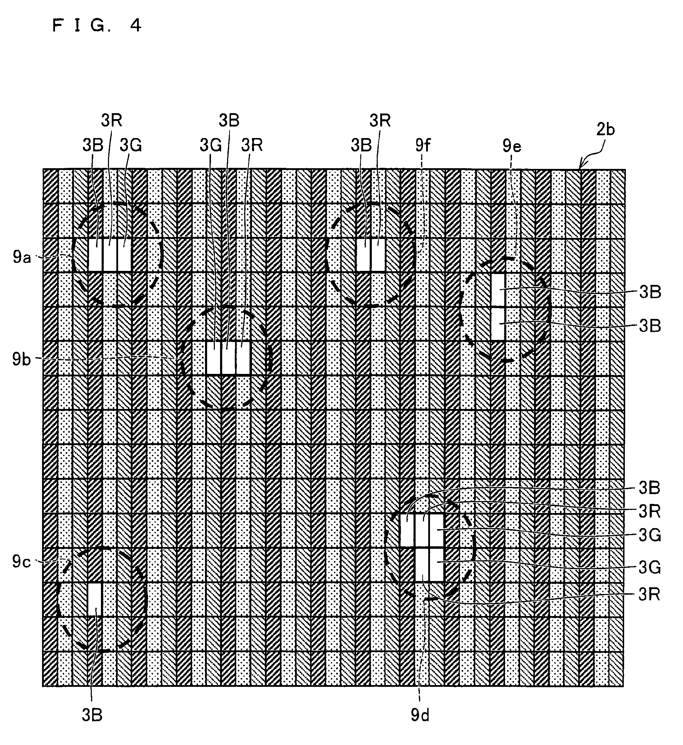

Fig. 4 is used for describing defective pixel groups 9a, 9b, 9c, 9d, 9e, and 9f in each of which one of or plural defective pixels 3R, 3G, and 3B is/are grouped. As shown in Fig. 4, the defective pixel groups 9a, 9b, 9c, 9d, 9e, and 9f are generated in such a way that the adjacent ink discharge targets 3R, 3G, and 3B are grouped as shown by circular arcs drawn with dotted lines. In the examples shown in Figs. 3 and 4, adjacent ones among 16 defective pixels 3R, 3G, and 3B are grouped into each group, so that 6 defective pixel groups 9a, 9b, 9c, 9d, 9e, and 9f are formed. Each of the defective pixel groups 9a, 9b, 9c, 9d, 9e, and 9f includes 5 defective pixels at the maximum. That is to say, as shown in Figs. 3 and 4, the defective pixel group 9a is constituted by a defective pixel 3B, a defective pixel 3R adjacent to the defective pixel 3B, and a defective pixel 3G adjacent to the defective pixel 3R. The defective pixel group 9b is constituted by a defective pixel 3G, a defective pixel 3B adjacent to the defective pixel 3G, and a defective pixel 3R adjacent to the defective pixel 3B. The defective pixel group 9c is constituted by a single defective pixel 3G.

The defective pixel group 9d is constituted by a defective pixel 3B, a defective pixel 3R adjacent to the defective pixel 3B, a defective pixel 3G adjacent to the defective pixel 3R, another defective pixel 3G which abuts on the narrow side of the defective pixel 3G, and another defective pixel 3R which abuts on the narrow side of the defective pixel 3R and the long side of said another defective pixel 3G. The defective pixel group 9e is constituted by two defective pixels 3B which abut on one another at their short sides. The defective pixel group 9f is constituted by two defective pixels 3B and 3R adjacent to one another.

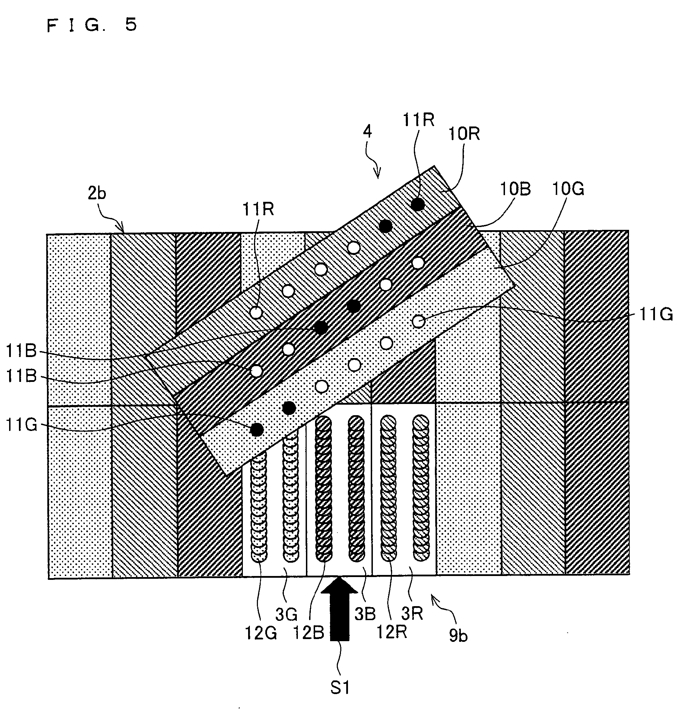

Fig. 5 is used for describing the ink discharging section 4 which discharges ink onto three adjacent defective pixels 3R, 3G, and 3B. The ink discharging section 4 is provided with heads 10R, 10G, and 10B. The heads 10R, 10B, and 10G are adjacently provided in this order. On the head 10R, 6 selectable nozzles 11R are provided along the long sides of the head, at intervals of about 100µm. On the head 10B, 6 selectable nozzles 11B are provided at intervals of about 100µm. On the head 10G, 6 selectable nozzles 11B are provided at intervals of about 100µm.

The nozzle specifying section 4 allocates, based on the size and a specified color of each of defective pixels 3R, 3B, and 3G which have been stored in the defective pixel information storage section 5, the selectable nozzles 11R, 11B, and 11G to a cluster of defective pixels which have been grouped by the defective pixel grouping section 6. In the example shown in Fig. 5, two selectable nozzles 11R in the right-hand part of the head 10R are allocated to the defective pixel 3R belonging to the defective pixel group 9b. Two selectable nozzles 11B in the central part of the head 10B are allocated to the defective pixel 3B belonging to the defective pixel group 9b. Two selectable nozzles 11G in the left-hand part of the head 10G are allocated to the defective pixel 3G.

In allocating the selectable nozzles 11R, 11B, and 11G, the selection of a selectable nozzle is performed in consideration of whether the nozzle is a dischargeable nozzle or a non-dischargeable nozzle and whether the ink discharge target 7 can sufficiently receive a predetermined amount of a liquid droplet.

A dischargeable nozzle is ready to discharge ink with stable targeting accuracy which falls within a predetermined range. A non-dischargeable nozzle is not able to discharge ink on account of reasons such as entrance of a foreign substance into the nozzle or is in an unstable state of ink discharge and its targeting accuracy fails to fall within the predetermined range.

After prolonged use of inkjet, a nozzle may become non-dischargeable due to reasons such as changes in the head or ink over time. In such cases, a stable discharge state is regained typically by performing a discharge recovery process such as a drain treatment and a wiping process. However, since manufacturing time of a manufacturing apparatus or the like is strictly controlled, the frequency of the time-consuming discharge recovery process is required to be as low as possible. In the present embodiment, information for specifying a non-dischargeable nozzle is registered in the nozzle allocation section 7 in advance. It is therefore possible to repair a defective section by efficiently select a dischargeable nozzle by the nozzle allocation section 7, without carrying out the discharge recovery process each time non-discharging nozzle is found.

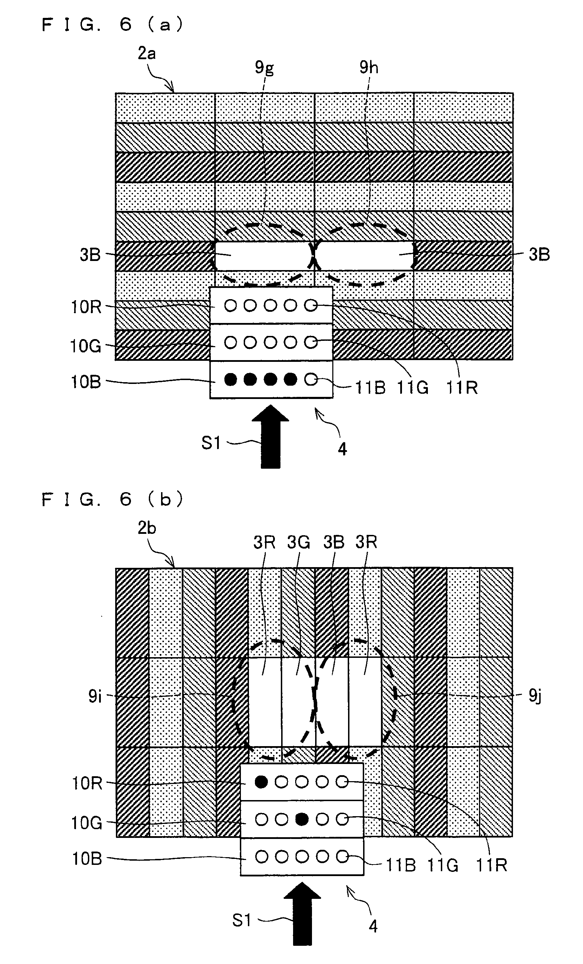

Fig. 6(a) is used for describing the ink discharging section 4 which discharges ink onto two adjacent defective pixels 3B. Fig. 6(b) is used for describing the ink discharging section 4 which discharges ink onto 4 adjacent defective pixels 3R, 3G, 3B, and 3R.

As shown in Fig. 6(a) and Fig. 6(b), there are cases where selectable nozzles cannot be allocated to all of the defective pixels in a single group due to the arrangement and sizes of the pixels, even with the print width achieved such that all selectable nozzles are aligned in the direction orthogonal to the main scanning direction S1. In cases where it is not possible to allocate the selectable nozzles to all of the defective pixels, a single group of defective pixels is regrouped into plural groups in such a way that the selectable nozzles are allocated to all pixels.

In the case of Fig. 6(a), the left and right (i.e. two) defective pixels 3B are required to constitute defective pixel groups 9g and 9h, respectively. That is to say, blue defective pixels 3B which are represented as blue pixel defects are arranged to be different groups. In the case of Fig. 6(a), black-colored four selectable nozzles 11B counted from the left periphery of the head 10B are selected, and these four selectable nozzles 11B discharge ink onto the defective pixel 3B belonging to the defective pixel group 9g.

On the other hand, in the case of Fig. 6(b), it is necessary to newly form defective pixel groups including two left defective pixels and two right defective pixels, respectively, or defective pixel groups including a single defective pixel and three defective pixels, respectively. Therefore, as shown in Fig. 6(b), when defective pixel groups are constituted by two left defective pixels and two right defective pixels, respectively, for example the red defective pixel 3R which is a red pixel defect and the green defective pixel 3G which is a green pixel defect are grouped as a single defective pixel group 9i whereas the blue defective pixel 3B which is a blue pixel defect and the red defective pixel 3R which is a red pixel defect are grouped into the other defective pixel group 9j. In this way, the groups are formed in accordance with the print width covered by the selectable nozzles 11R, 11G, and 11B. In the example shown in Fig. 6(b), the selectable nozzle 11R indicated by the leftmost black circle of the head 10R and the selectable nozzle 11G indicated by the central black circle of the head 10G are selected. The selected selectable nozzle 11R discharges ink onto the defective pixel 3R belonging to the defective pixel group 9i, whereas the selected selectable nozzle 11G discharges ink onto the defective pixel 3G belonging to the defective pixel group 9i.

As discussed above, considering the necessary conditions of grouping, the targets of grouping into a single group are defective pixels 3R, 3B, and 3G which are aligned in the sub scanning direction orthogonal to the main scanning direction S1 and to which selectable nozzles 11R, 11G, and 11B can be allocated. Now, grouping of defective pixels aligned in the main scanning direction S1 is discussed. If defective pixels which are far from one another along the main scanning direction S1 are grouped, the ink discharging section 4 is required to keep moving along the main scanning direction S1 until all defective pixels in the group are repaired. In cases of such a grouping involving long-distance movement of the ink discharging section 4, repair of defective pixels cannot be carried out while the ink discharging section 4 is moving. For this reason, in consideration of the movement of the ink discharging section 4 between the grouped defective pixels, the targets of grouping are preferably defective pixels which are included in a series of about 10 pixels along the main scanning direction S1. It is noted that the preferable range of the targets may vary depending on the size of each defective pixel.

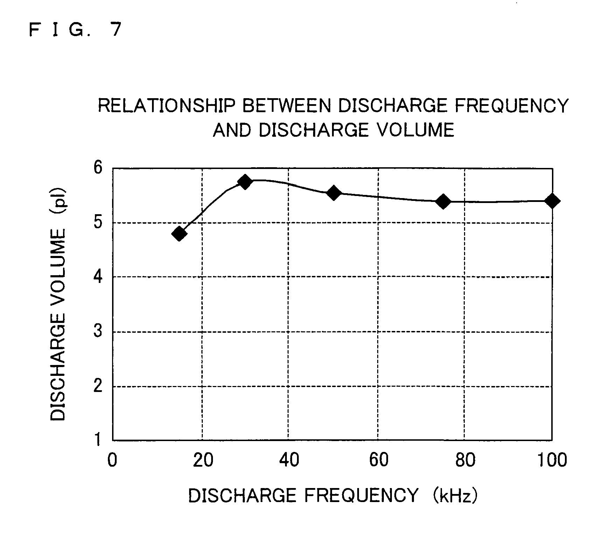

Fig. 7 is a graph showing the relationship between a discharge frequency and a discharge volume of the ink discharging section 4. The discharge pattern generation section 8 generates a discharge pattern for a discharge timing signal which is supplied to each of selectable nozzles 11R, 11B, and 11G that have been allocated by the nozzle allocation section 7 to grouped defective pixels 3R, 3B, and 3G. A discharge pattern for a discharge timing signal is generated in such a manner that predetermined discharge droplet amounts which are different depending on the sizes of the defective pixels 3R, 3B, and 3G are subjected to droplet number correction in accordance with the discharge frequency of each of the selectable nozzles 11R, 11B, and 11G, so that the number of discharge from each of the selectable nozzles 11R, 11B, and 1 1 G is figured out. The droplet number correction is carried out in such a way that, in accordance with the relationship between a discharge frequency and a discharge volume shown in Fig. 7, the number of discharge is recalculated by giving a correction coefficient to a discharge droplet amount per a single droplet from each of the selectable nozzle 11R, 11B, and 11G, which amount has been measured at the discharge frequency set in advance.

More specifically, first, a conversion table regarding a correction coefficient for a droplet amount with respect to a discharge frequency corresponding to the graph of Fig. 7 is prepared. Then a total amount of droplets required for discharge is calculated for a specified defective pixel, in consideration of the size of the defective pixel, the ratio of remaining film of ink, or the like. Based on the number of selectable nozzles allocated to the defective pixel and an amount of discharge per a single droplet from each selectable nozzle, how many droplets each selectable nozzle requires to fill the specified defective pixel is calculated.

Thereafter, based on the print length (lengths of discharged dots 12R, 12B, and 12G) on the target defective pixel and the number of discharge from each selectable nozzle, the discharge frequency is calculated. To the calculated discharge frequency, a value of the prepared conversion table is assigned. Then a total droplet amount for the target defective pixel at the calculated discharge frequency is recalculated, and the correction of the number of droplets is carried out for each of the allocated selectable nozzles. The calculation of the discharge frequency and the correction of the number of droplets are repeated and a convergence is obtained, with the result that the number of droplets in accordance with the discharge frequency is calculated. As to the convergence, it is assumed that a convergence is obtained if a value after the correction falls within a predetermined allowable range, and values are controlled so as not to be divergent in the course of the repeated loops.

In the ink discharging section 4, after the positions of the grouped defective pixels 3R, 3B, and 3G and the positions of the corresponding selectable nozzle 11R, 11B, and 11G on the heads 10R, 10B, and 10G are adjusted along the sub scanning direction, the heads are moved along the main scanning direction S1 and ink discharge is performed in such a way as to repair all of the grouped defective pixels by a single scanning movement. As a result the defective pixels are repaired. The aforesaid operation is carried out for all defective pixel groups, with the result that the repair of all of the defective pixels 3R, 3B, and 3G is completed. In the example shown in Fig. 4, for 16 defective pixels 3R, 3B, and 3G, the ink discharging section 4 moves to 6 defective pixel groups 9a, 9b, 9c, 9d, 9e, and 9f so that all of the defective pixels 3R, 3B, and 3G are repaired.

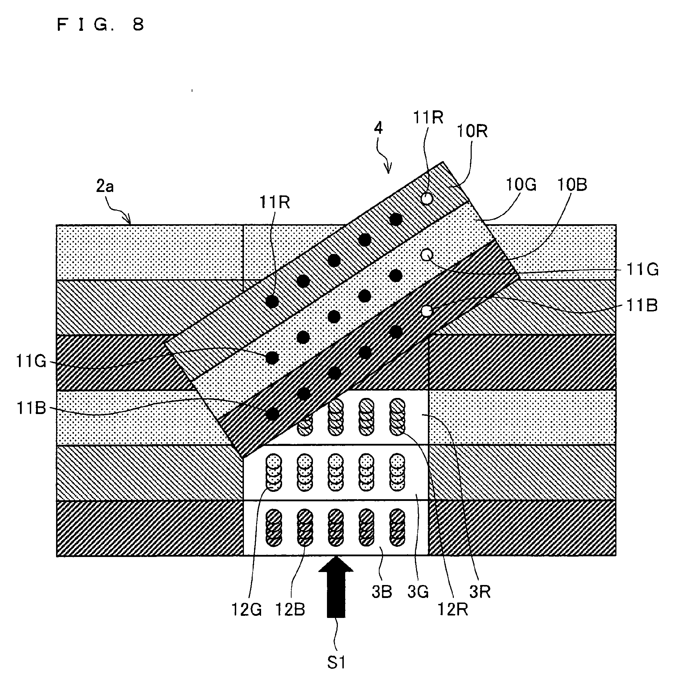

Ink discharge from the ink discharging section 4 onto the defective pixels 3R, 3B, and 3G is classified into the following two cases: as shown in Fig. 5, the main scanning direction S1 of the ink discharging section 4 is in parallel to the long sides of the defective pixels 3R, 3B, and 3G and ink is discharged along the long sides of the defective pixel 3R, 3B, and 3G; and as shown in Fig. 8, the main scanning direction S1 of the ink discharging section 4 is in parallel to the short sides of the defective pixels 3R, 3B, and 3G and ink is discharged along the short sides of the defective pixel 3R, 3B, and 3G.

In each case, it is necessary to select different selectable nozzles 11R, 11B, and 11G in accordance with the alignment of the defective pixels 3R, 3B, and 3G and their specified colors. A discharge pattern is generated in such a way as to cause the selected selectable nozzles to put predetermined amounts of droplets into the defective pixels 3R, 3B, and 3G, and the ink discharging section 4 provided with the head 10R, 10G, and 10B is moved relative to the CF panel 2a, with the result that the defective pixels 3R, 3B, and 3G are repaired.

Fig. 5 and Fig. 8 show examples where the ink discharging section 4 is arranged to tilt with respect to the main scanning direction S1. This tilt intends to allocate more selectable nozzles 11R, 11B, and 11G to the defective pixels 3R, 3B, and 3G, by taking advantage of the narrowing of the gap (print width) of adjacent selectable nozzle achieved by the tilt of the ink discharging section 4. Allocating many selectable nozzle 11R, 11B, and 11G to the defective pixels 3R, 3B, and 3G, it is possible to reduce the number of droplets discharged from each of the selectable nozzles 11R, 11B, and 11G. Alternatively, a relative moving rate of the ink discharging section 4 along the main scanning direction S1 is increased. This is because a discharge pattern is generated with discharge timings at which a predetermined amount of liquid is obtained from many selectable nozzles.

On the substrate 13, the defective pixels 3R, 3B, and 3G are disposed, for example, to extend in the vertical direction as in the cases of the CF panels 2b and 2c shown in Fig. 2 or to extend in the horizontal direction as in the case of the CF panel 2a shown in Fig. 2. Also, as in the case of the CF panels 2a and 2b and the CF panel 2c, CF panels on which differently-sized pixels are formed are concurrently provided on a single substrate. Even in such a case, defective pixels in each of the CF panels 2a, 2b, and 2c are independently dealt with in the manner as above, so that the defective pixels 3R, 3B, and 3G are repaired even if the CF panel 2a, 2b, and 2c are variously aligned on the substrate 13 and the CF panels are variously sized.

In the present embodiment, a single head can deal with identically-oriented but differently-sized defective pixels (the defective pixels on the CF panel 2b and the defective pixels on the CF panel 2c shown in Fig. 2). For identically-oriented but differently-sized defective pixels (see the CF panel 2b and the CF panel 2c shown in Fig. 2), different nozzles are allocated, respectively. A single head deals with these defective pixels in such a way that a large number of nozzles are allocated to large defective pixels on the CF panel 2c, whereas a smaller number of nozzles are allocated to small defective pixels on the CF panel 2b.

The same basically holds true for the defective pixels on the CF panel 2a and the defective pixel of the CF panel 2b, which are differently oriented. These pixels are dealt with by allocating different numbers of nozzles of the head. Also in the case where the defective pixels on the CF panel 2a and the defective pixel of the CF panel 2b are identically sized, the number of allocated nozzles is changed for each type of pixels and ink is discharged to each type of pixels based on a discharge timing signal indicating a discharge pattern in which the length of printing along the main scanning direction S1 is suitably differentiated.

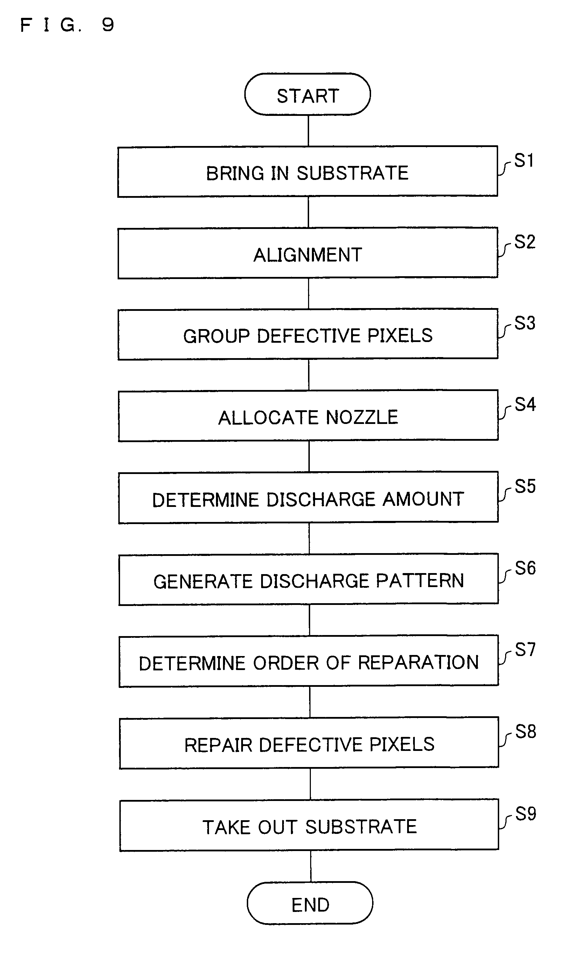

Fig. 9 is a flowchart showing the operation of the ink discharging apparatus 1. First, into the ink discharging apparatus 1, a substrate 13 which is a medium is brought (Step S1). Subsequently, an alignment process is carried out so that the positions of alignment marks on the substrate 13 are recognized, and then a substrate coordination system for the substrate 13 thus brought in is constructed (Step S2).

Thereafter, based on the defective pixel specifying information stored in the defective pixel information storage section 5 of the ink discharging apparatus 1, defective pixels 3R, 3B, and 3G which are in proximity to one another are grouped in consideration of the position and orientation of each of the defective pixels 3R, 3B, and 3G (Step S3).

To the grouped defective pixels 3R, 3B, and 3G, selectable nozzles 11R, 11B, and 11G of the respective heads 10R, 10B, and 10G are allocated (Step S4). In consideration of the alignment of the defective pixels 3R, 3B, and 3G, the selectable nozzle 11R, 11B, and 11G of the head 10R, 10B, and 10G from which inks are discharged are allocated to the defective pixels 3R, 3B, and 3G. To a local defect spreading across adjacent pixels, selectable nozzles 11R, 11B, and 11G are allocated so that the defect is repaired at once. In doing so, the selection of the selectable nozzles 11R, 11B, and 11G must be carried out in consideration of the targeting accuracy of ink discharge onto a defective pixel on a CF panel of the substrate 13 which has been brought into the ink discharging apparatus 1.

The ink discharging apparatus 1 always involves positional errors. It is therefore necessary to select the selectable nozzles 11R, 11B, and 11G in consideration of the positional accuracy. When each of the selected selectable nozzles 11R, 11B, and 11G is allocated at the very edge of each of the defective pixels 3R, 3B, and 3G, a position at which an ink droplets lands in the actual repair operation may be off the defective pixels 3R, 3B, and 3G, depending on the targeting accuracy. On the other hand, when each of the selectable nozzles 11 R, 11 B, and 11G are allocated at a position far from the edges of each of the defective pixels 3R, 3B, and 3G, a landed ink droplet may not sufficiently spread, especially at the corners of each of the rectangular defective pixels 3R, 3B, and 3G, resulting in the formation of luminescent spots in the pixels and deterioration of the quality of images displayed on the CF panel. It is therefore necessary to select the selectable nozzles 11R, 11B, and 11G in consideration of the targeting accuracy of ink discharge from the ink discharging apparatus 1, in such a way as to sufficiently fill the inner part of each of the defective pixel 3R, 3B, and 3G by landed ink.

Furthermore, in a similar manner as above, a position from which an ink droplet is discharged from each of the selectable nozzles 11R, 11B, and 11G must be controlled in consideration of the targeting accuracy so that discharged ink lands within the border of each of the defective pixels 3R, 3B, and 3G. In other words, it is necessary to control a position from which an ink droplet is discharged, in such a way as to cause the ink droplet lands within the border of each of the defective pixels 3R, 3B, and 3G and the ink sufficiently spreads to the corners.

Following the step above, once the selectable nozzle 11R, 11B, and 11G are allocated, an amount of droplets discharged from each of the selectable nozzles 11R, 11B, and 11G is determined in consideration of its discharge frequency, based on the size of each pixel, an amount of a single droplet discharged from each of the allocated selectable nozzle 11R, 11B, and 11G, and a total amount of inks to land on the defective pixel 3R, 3B, and 3G among the pixels to maintain the properties of the pixels (Step S5). Based on the determined droplet amount, a discharge pattern indicated by a discharge signal, by which inks are discharged from the allocated selectable nozzles 11R, 11B, and 11G so as to fill the defective pixels 3R, 3B, and 3G, is generated (Step S6).

Thereafter, the order of repair of the defective pixels 3R, 3B, and 3G is determined (Step S7). The order of repair is determined so that the time for repairing each group of the defective pixels 3R, 3B, and 3G is minimized as much as possible. The order of repair is determined so that the distance of movement of the ink discharging section 4 is minimized and the number of times the ink discharging section 4 stops is reduced. Furthermore, the defective pixels 3R, 3B, and 3G are selected and the order of repair of the defective pixels 3R, 3B, and 3G is determined so that the speed of the movement to the next defective pixel repairing position is not lowered.

In accordance with the order of repair of the grouped defective pixel 3R, 3B, and 3G having been determined above, ink is discharged onto each of the defective pixels 3R, 3B, and 3G and the pixels are repaired in order (Step S8). When the repair of all of the defective pixels 3R, 3B, and 3G is completed, the repair process for the target substrate 13 is completed and the substrate 13 is taken out from the ink discharging apparatus 1 (Step S9), and the next substrate 13 is brought into the ink discharging apparatus 1.

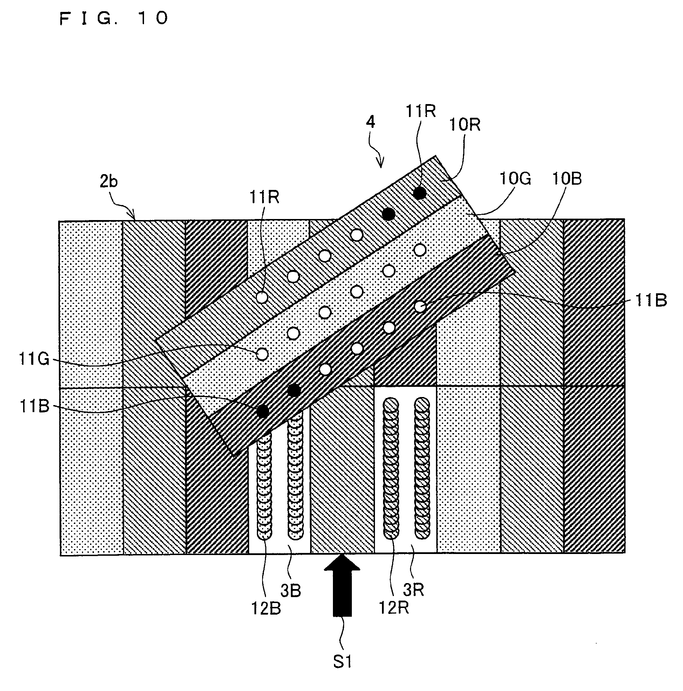

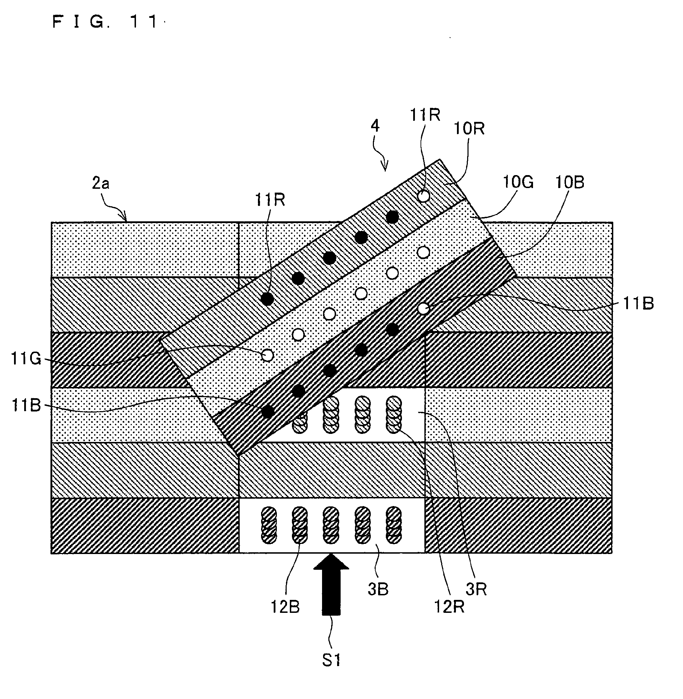

Fig. 10 is used for describing the ink discharging section 4 which discharges ink onto two defective pixels 3R and 3B which are close to one another. Fig. 11 is used for describing the ink discharging section 4 which discharges ink onto other two defective pixels 3R and 3B which are close to one another.

The embodiment above takes up an example in which defective pixels are adjacent to one another. The present invention, however, is not limited to this. Plural defective pixels 3R, 3B, and 3G are not necessarily adjacent to one another. For example, as shown in Fig. 10 and Fig. 11, defective pixels 3R and 3B are only required to be within the width of the ink discharging section 4 along the direction orthogonal to the main scanning direction S1 of the ink discharging section 4, when viewed in the direction perpendicular to the surface of the CF panel. As such, it is possible to apply the present invention to defective pixels 3R and 3B which are not adjacent to one another but are close to one another with a non-defective pixel being sandwiched therebetween.

The embodiment above discusses a case of defective pixels on a CF panel. The present invention, however, is not limited to this case. It is possible to apply the present invention to manufacture of an electroluminescence (EL) display apparatus having plural discharge target sections forming a matrix or a stripe pattern. It is also possible to apply the present invention to manufacture of a back substrate of a plasma display apparatus. In addition, it is possible to apply the present invention to manufacture of an image display apparatus including an electron emission element and manufacture of wires.

The invention being thus described, it will be obvious that the same way may be varied in many ways within the scope of the claims. Such variations are not to be regarded as a departure from the spirit and scope of the invention, and all such modifications as would be obvious to one skilled in the art are intended to be included within the scope of the following claims.

The ink discharging apparatus of the present invention is preferably adapted so that said neighboring ink discharge targets are disposed within a width of the ink discharge means, along a direction orthogonal to a main scanning direction of the ink discharge means, when viewed in a direction vertical to a surface of the medium.

According to this plural types of nozzles corresponding to respective neighboring ink discharge targets are provided in ink discharge means, so that ink can be discharged onto the neighboring ink discharge targets by a single scanning movement.

The ink discharging apparatus of the present invention is preferably adapted to further include: ink discharge target information storage means for storing information by which said ink discharge targets on the medium are specified; and ink discharge target grouping means for generating a discharge target group in which said neighboring ink discharge targets are grouped, the ink discharge means discharging the ink onto said neighboring ink discharge targets belonging to the discharge target group, by a single scanning movement with respect to the discharge target group.

According to this arrangement, the neighboring ink discharge targets are discovered in advance and grouped into a discharge target group, and ink is discharged for each discharge target group.

The ink discharging apparatus of the present invention is preferably adapted to further include: nozzle allocation means for allocating nozzles to said neighboring ink discharge targets belonging to the discharge target group; and discharge pattern generation means for generating a discharge timing signal indicating an ink discharge pattern and supplying the discharge timing signal to the allocated nozzles, the nozzles discharging the ink based on the discharge timing signal generated by the discharge pattern generation means.

This arrangement makes it possible to discharge, by a simple structure, ink onto neighboring ink discharge targets by a single scanning movement of ink discharge means.

The ink discharging apparatus of the present invention is preferably adapted so that the ink discharge target information storage means stores a position and an orientation of each of the ink discharge targets on the medium, and the ink discharge target grouping means groups the ink discharge targets, based on the position and orientation of each of the ink discharge targets and the main scanning direction of the ink discharge means, the position and orientating being stored in the ink discharge target information storage means.

This arrangement, by a simple structure, makes it possible to group neighboring ink discharge targets and discharge ink for each group by a single scanning movement of ink discharge means.

The ink discharging apparatus of the present invention is preferably adapted so that the nozzle allocation means allocates the discharge target nozzles in accordance with an alignment of said neighboring ink discharge targets grouped into the discharge target group by the ink discharge target grouping means.

This arrangement makes it possible to allocate the discharge target nozzles to allow ink to sufficiently spread to the corner sections of each ink discharge target, in accordance with the alignment of the ink discharge targets.

The ink discharging apparatus of the present invention is preferably adapted so that the discharge pattern generation means generates the discharge timing signal for the allocated nozzles, in accordance with an alignment and sizes of said neighboring ink discharge targets grouped into the discharge target group by the ink discharge target grouping means.

This arrangement makes it possible to generate the discharge timing signal supplied to the nozzles in such a way that the ink sufficiently spread to the corner sections of each discharge target, in accordance with the alignment and sizes of the ink discharge targets.

The ink discharging apparatus of the present invention is preferably adapted so that the discharge pattern generation means corrects an amount of a droplet discharged from each of the nozzles by adjusting the discharge timing signal in accordance with a discharge frequency of each of the nozzles.

According to this arrangement, droplet amount required for realizing a predetermined film thickness is obtained taking in consideration that an amount of a droplet discharged from a nozzle is changed in accordance with a discharge frequency of the nozzle. It is therefore possible to correct the number of droplets discharged from each nozzle.

The ink discharging apparatus of the present invention is preferably adapted so that the medium is a CF panel for a liquid crystal display, and said ink discharge targets are defective pixels on the CF panel.

According to this arrangement, ink is discharged onto neighboring defective pixels by a single scanning movement of ink discharge means. This makes it possible to reduce the number of times the ink discharge means moves to the defective pixels, as compared to the conventional arrangement in which ink is individually discharged onto each defective pixel. As a result it is possible to shorten processing time to discharge ink onto all ink discharge targets.

### INDUSTRIAL APPLICABILITY

The present invention may be used for repairing a defective pixel occurring on a CF panel. The present invention can also be used for manufacturing an electroluminescence (EL) display apparatus having plural discharge target sections forming a matrix or stripes. The present invention can also be used for manufacturing a back substrate of a plasma display apparatus, for manufacturing an image display apparatus including an electron emission element, and for manufacturing wires.

## Claims

1. An ink discharging apparatus comprising ink discharge means which is arranged to be movable relative to a medium in order to discharge ink onto plural ink discharge targets dispersed on the medium,
onto neighboring ink discharge targets among said plural ink discharge targets, the ink discharge means discharging the ink by a single scanning movement with respect to said neighboring ink discharge targets.

2. The ink discharging apparatus as defined in claim 1,
wherein, said neighboring ink discharge targets are disposed within a width of the ink discharge means, along a direction orthogonal to a main scanning direction of the ink discharge means, when viewed in a direction vertical to a surface of the medium.

3. The ink discharging apparatus as defined in claim 1, further comprising:
ink discharge target information storage means for storing information by which said ink discharge targets on the medium are specified; and
ink discharge target grouping means for generating a discharge target group in which said neighboring ink discharge targets are grouped,
the ink discharge means discharging the ink onto said neighboring ink discharge targets belonging to the discharge target group, by a single scanning movement with respect to the discharge target group.

4. The ink discharging apparatus as defined in claim 3, further comprising:
nozzle allocation means for allocating nozzles of the ink discharge means to said neighboring ink discharge targets belonging to the discharge target group; and
discharge pattern generation means for generating a discharge timing signal indicating an ink discharge pattern and supplying the discharge timing signal to the allocated nozzles,
the nozzles discharging the ink based on the discharge timing signal generated by the discharge pattern generation means.

5. The ink discharging apparatus as defined in claim 3,
wherein, the ink discharge target information storage means stores a position and an orientation of each of the ink discharge targets on the medium, and
the ink discharge target grouping means groups the ink discharge targets, based on the position and orientation of each of the ink discharge targets and the main scanning direction of the ink discharge means, the position and orientating being stored in the ink discharge target information storage means.

6. The ink discharging apparatus as defined in claim 3,
wherein, the nozzle allocation means allocates the discharge target nozzles in accordance with an alignment of said neighboring ink discharge targets grouped into the discharge target group by the ink discharge target grouping means.

7. The ink discharging apparatus as defined in claim 4,
wherein, the discharge pattern generation means generates the discharge timing signal for the allocated nozzles, in accordance with an alignment and sizes of said neighboring ink discharge targets grouped into the discharge target group by the ink discharge target grouping means.

8. The ink discharging apparatus as defined in claim 4,
wherein, the discharge pattern generation means corrects an amount of a droplet discharged from each of the nozzles by adjusting the discharge timing signal in accordance with a discharge frequency of each of the nozzles.

9. The ink discharging apparatus as defined in claim 1,
wherein, the medium is a CF panel for a liquid crystal display, and
said ink discharge targets are defective pixels on the CF panel.

10. An ink discharging method using ink discharge means which is arranged to be movable relative to a medium in order to discharge ink onto plural ink discharge targets dispersed on the medium,
onto neighboring ink discharge targets among said plural ink discharge targets, the ink being discharged by a single scanning movement of the ink discharge means with respect to said neighboring ink discharge targets.

11. The ink discharging method as defined in claim 10,
wherein, said neighboring ink discharge targets are disposed within a width of the ink discharge means, along a direction orthogonal to a main scanning direction of the ink discharge means, when viewed in a direction vertical to a surface of the medium.

12. The ink discharging method as defined in claim 10,
wherein, a discharge target group in which said neighboring ink discharge targets are grouped is generated based on information by which said ink discharge targets on the medium are specified, and
the ink is discharged onto said neighboring ink discharge targets belonging to the discharge target group, by a single scanning movement with respect to the discharge target group.

13. The ink discharging method as defined in claim 12,
wherein, nozzles are allocated to said neighboring ink discharge targets belonging to the discharge target group,
to the allocated nozzles, a discharge timing signal indicating an ink discharge pattern is generated and supplied, and
the nozzles discharges the ink based on the discharge timing signal.

14. The ink discharging method as defined in claim 12,
wherein, the information by which said ink discharge targets are specified includes information regarding a position and an orientation of each of said ink discharge targets on the medium, and
said neighboring ink discharge targets are grouped based on the information indicating the position and the orientation of each of said ink discharge targets and the main scanning direction of the ink discharge means.

15. The ink discharging method as defined in claim 12,
wherein, the discharge target nozzles are allocated in accordance with an alignment of said neighboring ink discharge targets belonging to the discharge target group.

16. The ink discharging method as defined in claim 13,
wherein, the discharge timing signal is generated for the allocated nozzles, in accordance with the alignment and sizes of said neighboring ink discharge targets belonging to the discharge target group.

17. The ink discharging method as defined in claim 13,
wherein, an amount of a droplet discharged from each of the nozzles is corrected by adjusting the discharge timing signal in accordance with a discharge frequency of each of the nozzles.

18. The ink discharging method as defined in claim 10,
wherein, the medium is a CF panel for a liquid crystal display, and
said ink discharge targets are defective pixels on the CF panel.
